## Europäisches Patentamt

## European Patent Office

## Office européen des brevets

(11) Publication number: **0 124 524**
**B1**

# EUROPEAN PATENT SPECIFICATION

(45) Date of publication of patent specification: **14.02.90**

(51) Int. Cl.⁵: **G 01 C 19/64**

(21) Application number: **83900368.8**

(22) Date of filing: **01.11.82**

(86) International application number:
**PCT/US82/01542**

(87) International publication number:
**WO 84/01822 10.05.84 Gazette 84/12**

(54) INTERFEROMETER WITH KERR EFFECT COMPENSATION.

(43) Date of publication of application:
**14.11.84 Bulletin 84/46**

(45) Publication of the grant of the patent:
**14.02.90 Bulletin 90/07**

(84) Designated Contracting States:
**AT BE CH DE FR GB LI LU NL SE**

(56) References cited:
**US-A-4 283 144**

**OPTICS LETTERS, vol. 7, no. 6, June 1982, pages 282-284, Optical Society of America, New York, US; R.A. BERGH et al.: "Compensation of the optical Kerr effect in fiber-optic gyroscopes" N,PHYSICS TODAY, VOLUME 34, no. 10, ISSUED OCTOBER 1981, (NEW YORK, NEW YORK), "SENSITIVE FIBER-OPTIC GYROSCOPES, PAGES 20-22**

The file contains technical information submitted after the application was filed and not included in this specification

(73) Proprietor: **THE BOARD OF TRUSTEES OF THE LELAND STANFORD JUNIOR UNIVERSITY Encina 105 Stanford University Stanford California 94305 (US)**

(72) Inventor: **SHAW, Herbert, John**
**719 Alvarado Row**
**Stanford, CA 94305 (US)**
Inventor: **LEFEVRE, Herve, C. Lab. Central de Recherches**
**Thomson-CSF Domaine de Corbeville B.P. 10 F-94401 Orsay (FR)**
Inventor: **BERGH, Ralph, A.**
**89 Douglass Way**
**Atherton, CA 94025 (US)**
Inventor: **CUTLER, Cassius, C.**
**1300 Oak Creek Drive Apartment 318 Palo Alto, CA 94304 (US)**
Inventor: **CULSHAW, Brian Dept. of E. and E. E. Royal College of Building Univ. of Strathclyde 204 George Street Glasgow G1 1XW (GB)**

(74) Representative: **Rushton, Ronald et al SOMMERVILLE & RUSHTON 11 Holywell Hill St. Albans Hertfordshire AL1 1EZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the invention

The present invention relates to fiber optic interferometers, and particularly, to fiber optic ring interferometers for rotation sensing.

A fiber optic ring interferometer typically comprises a loop of fiber optic material to which lightwaves are coupled for propagation around the loop in opposite directions. After traversing the loop, the counter-propagating waves are combined so that they constructively or destructively interfere to form an optical output signal. The intensity of this optical output signal varies as a function of the type and amount of interference, which, in turn, is dependent upon the relative phases of the counter-propagating waves.

Ring interferometers have proven particularly useful for rotation sensing. Rotation of the loop creates a relative phase difference between the counter-propagating waves, in accordance with the well-known "Sagnac" effect, with the amount of phase difference corresponding to the velocity of rotation. The optical output signal produced by the interference of the counter-propagating waves, when recombined, varies in intensity as a function of the rotation rate of the loop. Rotation sensing is accomplished by detection of this optical output signal.

While mathematical calculations indicate that ring interferometers should be capable of providing rotation sensing accuracies substantially better than are required for inertial navigation (e.g., 0.001 degrees per hour or less), the results achieved in practice have generally not conformed to theoretical expectations. Some of the reasons for the disparity between theoretical and actual results have been identified as including spurious waves caused by Rayleigh backscattering, and non-rotationally-induced phase differences caused by residual fiber birefringence.

More recently, it was discovered that the accuracy of rotation sensing is also limited by the A. C. Kerr effect. The A. C. Kerr effect is a well known optical effect in which the refractive index of a substance changes when the substance is placed in a varying electric field. In optical fibers, the electric fields of lightwaves propagating therethrough can themselves change the refractive index of the fiber, in accordance with the Kerr effect. The amount of change is proportional to the square of the electric field or the light intensity. Since the propagation constant of the fiber for each of the waves is a function of refraction index, the Kerr effect manifests itself as intensity-dependent perturbations of the propagation constants. Unless such perturbations happen to be exactly the same for each of the counterpropagating waves, the A.C. or optical Kerr effect will cause the waves to propagate with different velocities, resulting in a non-rotationally induced phase difference between the waves, and thereby creating a spurious signal which is indistinguishable from a rotationally induced signal. This spurious Kerr induced signal is a major source of long-term drift in current state of the art fiber optic rotation sensing interferometers.

Spurious signals due to the Kerr effect have been compensated by using certain types of modulators for modulating the source intensity to adjust the nonlinear interaction between the counterpropagating waves circulating in the loop of a gyroscope. In an article entitled "Compensation of the optical Kerr effect in fiber-optic gyroscopes" by R. A. Bergh, et al., *Optics Letters*, Vol. 7, No. 6, pp. 282—284, June 1982, a square wave modulation is used. A sine squared modulation is also proposed but does not reduce the rotation rate error due to the Kerr effect as effectively as a square wave modulation. The authors of the above article attempted to use a multimodal light source in order to reduce the noise due to Rayleigh backscattering. Such multimodal source, however, was found not suitable for use in gyroscopes, as it overcompensated for the Kerr signal and modulation only served to make the problem worse. A general overview of fiber optic gyroscopes, including the interferometer comprising a solid state multimode laser source described in the above article, can also be found in an article entitled "Sensitive Fiber-Optic Gyroscopes," *Physics Today*, Vol. 34 No. 10, October 1981 pages 20—22. The use of a superluminescent source has also been suggested by Bohm, et al. in "Low-Drift Fibre Gyro Using a Superluminescent Diode," *Electronics Letters*, May 14, 1981, Vol. 17, No. 10. As in the aforementioned Bergh reference, the multimodal source is solely used for its ability to reduce Rayleigh backscattering. The rms-drift achieved by Bohm, et al. is, however, 10 degrees per hour and much too high for most applications (intertial navigation in particular).

Thus, there exists a need to reduce or eliminate the Kerr induced phase difference in fiber optic interferometers, particularly in those requiring high sending accuracies, such as in inertial navigation grade rotation sensors.

### Summary of the invention

The present invention comprises a rotation sensing interferometer in which errors caused by the Kerr effect are reduced or eliminated by using a multimode light source which emits a total light signal, the total light signal being the sum of the signals for each mode and having a plurality of frequencies, a loop of fiber optic material, and a coupler for coupling light from the source to the loop to provide first and second lightwaves in the loop for propagation in opposite directions about the loop. The present invention is characterized in that the field amplitude of the total signal of the light emitted by the source is such that the difference between the average value of the square of the intensity of the total signal and twice the square of the average value of the intensity of the total signal is sufficiently small so as to substantially decrease the rotation rate error due to the Kerr effect to a value less than or equal to 0.1 degree per hour, whereby the differences in the average propagation constants for the waves are reduced.

In one preferred embodiment of the present invention, the multimode light source has a discrete number of modes and a duty cycle substantially equal to 50%, the duty cycle being achieved by selecting a number of modes sufficiently high to decrease the Kerr effect rotation rate error for a given average intensity of the total light signal.

Additionally, the device of the present invention may comprise a modulator for modulating the light intensity from the light source, the modulator cooperating with the variations in the light signal emitted by the light source to further reduce the differences in the average propagation constants for the waves. This modulator is ideally disposed to receive light from the light source.

Preferentially, the fiber optic interferometer is characterized in that the modulator is disposed to receive light from the light source. The fiber optic interferometer is characterized in that the fiber optic material is single mode for the plurality of frequencies of the light source.

In one embodiment of the present invention, the light source emits substantially polarized thermal light whose intensity is a stochastic, stationary and ergodic process. This light source can be a superluminescent diode. The light source of the present invention may have a deterministic phase or a random phase relationship between the modes. In a preferred embodiment of the invention, the light source has at least 50 axial modes.

The present invention also discloses a method for reducing the Kerr effect induced error in a fiber optic ring interferometer, characterized by the steps of selecting a light source having a plurality of frequencies to produce intensity modulated light in which the average value of the square of the intensity is substantially equal to twice the average value of the intensity squared so as to substantially decrease the rotation rate error due to the Kerr effect to a value less than or equal to 0.1 degree per hour, coupling light into the interferometer such that first and second counterpropagating waves travel therethrough, combining the counterpropagating waves to produce an interference pattern, and detecting intensity variations in the interference pattern.

Brief description of the drawings

These and other advantages of the present invention are best understood through reference to the drawings in which:

Figure 1 is a schematic drawing of the rotation sensor of the present invention showing the fiber optic components positioned along a continuous, uninterrupted strand of fiber optic material, and further showing the signal generator, photodetector, lock-in amplifier and display associates with the detection system;

Figure 2 is a sectional view of one embodiment of a fiber optic directional coupler for use in the rotation sensing interferometer of Figure 1;

Figure 3 is a sectional view of one embodiment of a fiber optic polarizer for use in the rotation sensor of Figure 1;

Figure 4 is a perspective view of one embodiment of a fiber optic polarization controller for use in the rotation sensor of Figure 1;

Figure 5 is a schematic diagram of the rotation sensor of Figure 1 with the polarizer, polarization controllers and phase modulator removed therefrom.

Figure 6 is a graph of the intensity of the optical output signal, as measured by the photodetector as a function of the rotationally induced Sagnac phase difference, illustrating the effects of birefringence-induced phase differences and birefringence-induced amplitude fluctuations;

Figure 7 is a graph of phase difference as a function of time showing the phase modulation of each of the counter-propagating waves and the phase difference between the counter-propagating waves;

Figure 8 is a schematic drawing illustrating the effect of the phase modulation upon the intensity of the optical output signal, as measured by the detector, when the loop is at rest;

Figure 9 is a schematic drawing showing the effect of the phase modulation upon the intensity of the optical output signal, as measured by the detector, when the loop is rotating; and

Figure 10 is a graph of the amplifier output signal as a function of the rotationally-induced Sagnac phase difference, illustrating an operating range for the rotation sensor of Figure 1;

Figure 11 is a simplified schematic drawing of a pair of square wave, intensity modulated lightwaves, counter-propagating through the loop of fiber optic material, and having substantially dissimilar peak intensities, to illustrate intensity-independent Kerr effect compensation; and

Figure 12 is a graph representing experimental results obtained with the apparatus and method of the invention.

Detailed description of the preferred embodiment

In addition to Kerr effect compensating means, the preferred embodiment of the present invention also includes a synchronous detection system for detecting the intensity of the optical output signal to indicate rotation rate, and a polarization controlling system to maintain the polarization of the light in the fiber loop. These systems are described in *Optics Letters*, Vol. 15, No. 11 (Nov. 1980) pp. 488—490, and in International Patent Application No. PCT/US82/00400, filed March 31, 1982. The polarization control and synchronous detection systems described therein are appropriate for use with the Kerr effect compensation of the present invention, and contribute to the overall performance of the rotation sensing interferometer described herein. The preferred embodiment will first be described in reference to these systems, and subsequently, a detailed description directed specifically to Kerr effect compensation will be provided. However, it should be understood at the outset that the Kerr effect compensation of the present invention has general application, and may be utilized in ring interferometers other than the type described in reference to the preferred embodiment.

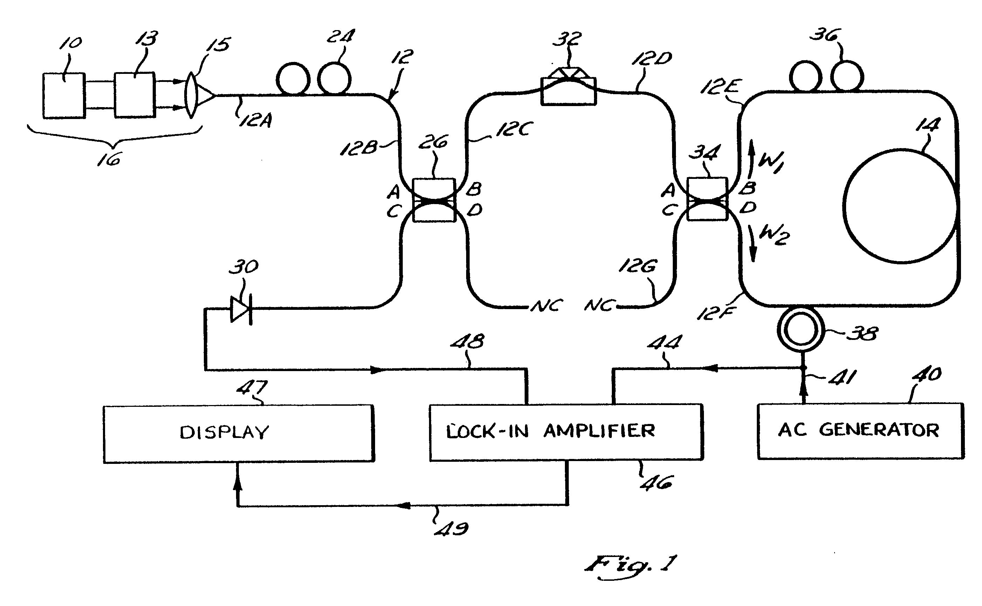

As shown in Figure 1, the rotation sensing interferometer of the preferred embodiment comprises a light source 10 for introducing light into a continuous length or strand of optical fiber 12, a portion of which is wound into a sensing loop 14. As used herein, the reference numeral 12 designates generally the entire continuous strand of optical fiber, while the numeral 12 with letter suffixes (A, B, C, etc.) designates portions of the optical fiber 12.

In the embodiment shown, the light source 10 preferably comprises a super-radiant diode or a superluminescent diode which operates according to the principles of stimulated emission in a plurality of modes. By way of specific example, the light source 10 may comprise a GaAlAs double-heterostructure laser as described by Wang et al., Appl. Phy. Lett. 41(7), 1 October 1982, pp. 587—589.

The fiber optic strand 12 may comprise a single mode fiber having, for example, an outer diameter of 80 microns (1 micron = 1 µm) and a core diameter of 4 microns. The loop 14 comprises a plurality of turns of the fiber 12, wrapped about a spool or other suitable support (not shown). By way of specific example, the loop 14 may have approximately 1,000 turns of fiber wound on a form having a diameter of 14 centimeters.

Preferably, the loop 14 is wound symmetrically, starting from the center, so that symmetrical points in the loop 14 are in proximity. Specifically, the fiber is wrapped about the spool so that the turns of the central portion of the loop 14 are positioned innermost adjacent to the spool and the turns toward the ends of the loop are positioned outermost away from the spool so that both end portions of the fiber loop 14 are positioned symmetrically about the central turns and are freely accessible at the outside of the loop 14. It is believed that this reduces the environmental sensitivity of the rotation sensor, since such symmetry causes time varying temperature and pressure gradients to have a similar effect on both of the counter-propagating waves.

Light from the light source 10 is optically coupled to one end of the fiber 12 by a lens 15. The laser 10 and lens 15 will be referred to collectively as the light source 16. Various components for guiding and processing the light are positioned or formed at various locations along the continuous strand 12. For the purpose of describing the relative locations of these components, the continuous fiber 12 will be described as being divided into seven portions, labelled 12A through 12G, respectively, with the portions 12A through 12E being on the side of the loop 14 that is coupled to the source 16, and the portions 12F and 12G being on the opposite side of the loop 14.

Adjacent to the light source 16, between the fiber portions 12A and 12B, is a polarization controller 24. A suitable type of polarization controller for use as the controller 24 is described in *Electronics Letters*, Vol. 16, No. 20 (Sept. 25, 1980) pp. 778—780. A description of the polarization controller 24 will be provided subsequently; however, it should be presently understood that the controller 24 permits adjustment of both the state and direction of polarization of the applied light.

The fiber 12 then passes through ports, labelled A and B, of a directional coupler 26, located between the fiber portions 12B and 12C, for coupling optical power to a second strand of optical fiber 28 which passes through the ports labelled C and D of the coupler 26, the port C being on the same side of the coupler as the port A, and the port D being on the same side of the coupler as the port B. The end of the fiber 28 extending from the port D terminates non-reflectively at the point labelled "NC" (for "not connected") while the end of the fiber 28 extending from the port C is optically coupled to a photodetector 30. By way of specific example, the photodetector 30 may comprise a standard, reverse-biased, silicon, pin-type photodiode. A coupler suitable for use in the present invention is described in detail in European patent application No. 81.102677.3, published in Bulletin No. 81/42 of Oct. 21, 1981, under publication No. 0038023, which is incorporated by reference herein.

After passing through the polarizer 32, the fiber 12 passes through ports, labelled A and B, of a directional coupler 34, located between the fiber portions 12D and 12E. The coupler 34 is preferably of the same type as described above in reference to the coupler 26. The fiber 12 is then wound into the loop 14, with a polarization controller 36 located between the loop 14 and fiber portion 12F. The polarization controller 36 may be of the type discussed in reference to the controller 24, and is utilized to adjust the polarization of the waves counter-propagating through the loop 14 so that the optical output signal, formed by superposition of these waves, has a polarization which will be efficiently passed, with minimal optical power loss, by the polarizer 32. Thus, by utilizing both the polarization controllers 24, 36, the polarization of the light propagating through the fiber 12 may be adjusted for maximum optical power.

A phase modulator 38, driven by an AC generator 40, and connected thereto by a line 41, is mounted on the fiber 12, between the loop 14 and the fiber portion 12F. This modulator 38 comprises a PZT cylinder, around which the fiber 12 is wrapped. The fiber 12 is bonded to the cylinder so that when it expands radially in response to the modulating signal from the generator 40, it stretches the fiber 12. An alternative type of phase modulator (not shown), suitable for use with the present invention, comprises a PZT cylinder which longitudinally stretches four segments of the fiber 12 bonded to short lengths of capilliary tubing at the ends of the cylinder. Those skilled in the art will recognize that this alternative type of modulator may impart a lesser degree of polarization modulation to the propagating optical signal than the modulator 38; however, it will be seen subsequently that the phase modulator 38 may be operated at a frequency which eliminates the undesirable effects of phase modulator-induced polarization modulation. Thus, either type of phase modulator is suitable for use in the present invention.

The fiber 12 then passes through ports, labelled C and D of the coupler 34, with the fiber portion 12F extending from the port D and the fiber portion 12G extending from the port C. Fiber portion 12G terminates non-reflectively at a point labelled "NC" (for "not connected"). The output signal from the AC generator 40 is supplied on a line 44 to a lock-in amplifier 46, which also is connected to receive the output of the photodetector 30 by a line 48. This signal to the amplifier 46 provides a reference signal for enabling the amplifier 46 to synchronously detect the detector output signal at the modulation frequency of the phase modulator 38. Thus, the amplifier 46 effectively provides a bandpass filter at the fundamental frequency (i.e., first harmonic) of the phase modulator 38, blocking all other harmonics of this frequency. The detected signal is integrated over a period of time, typically on the order of 1 second to 1 hour, to average out random noises. It will be seen below that the magnitude of this first harmonic component of the detector output signal is proportional, through an operating range, to the rotation rate of the loop 14. The amplifier 46 outputs a signal, which is proportional to this first harmonic component, and thus provides a direct indication of the rotation rate, which may be visually displayed on the display panel 47 by supplying the amplifier output signal to the display panel 47 on a line 49.

The couplers 26 and 34

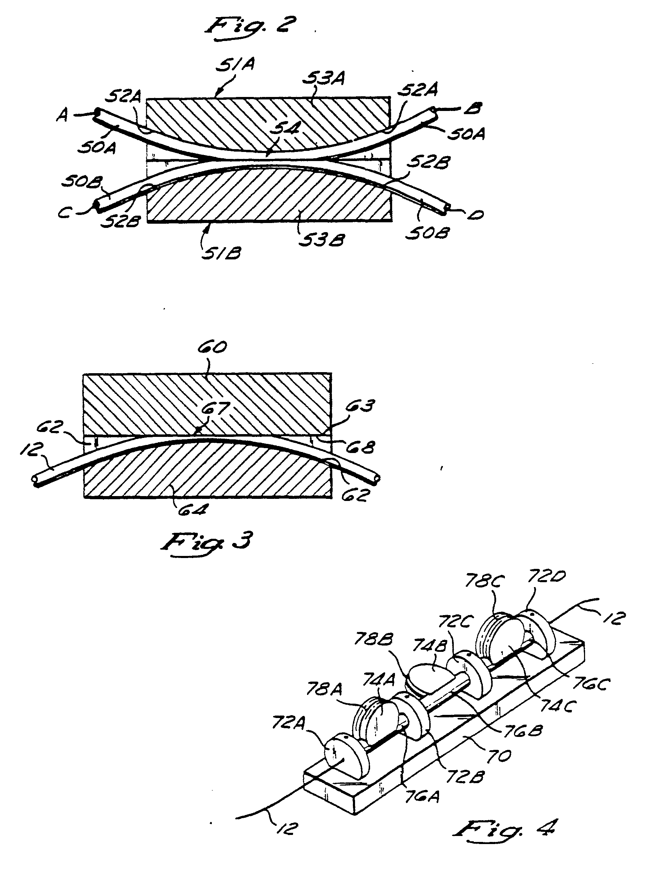

A preferred fiber optic directional coupler for use as the couplers 26 and 34 in the rotation sensor or gyroscope of the present invention is illustrated in Figure 2. The coupler includes two strands 50A and 50B of a single mode fiber optic material mounted in longitudinal arcuate grooves 52A and 52B, respectively, formed in optically flat, confronting surfaces of rectangular bases or blocks 53A and 53B, respectively. The block 53A with the strand 50A mounted in the groove 52A will be referred to as the coupler half 51A, and the block 53B with the strand 50B mounted in the groove 52B will be referred to as the coupler half 51B.

The arcuate grooves 52A and 52B have a radius of curvature which is very large compared to the diameter of the fibers 50, and have a width slightly larger than the fiber diameter to permit the fibers 50, when mounted therein, to conform to a path defined by the bottom walls of the grooves 52. The depth of the grooves 52A and 52B varies from a minimum at the center of the blocks 53A and 53B, respectively, to a maximum at the edges of the blocks 53A and 53B, respectively. This advantageously permits the fiber optic strands 50A and 50B, when mounted in the grooves 52A and 52B, respectively, to gradually converge toward the center and diverge toward the edges of the blocks 53A, 53B, thereby eliminating any sharp bends or abrupt changes in direction of the fibers 50 which may cause power loss through mode perturbation. In the embodiment shown, the grooves 52 are rectangular in cross-section; however, it will be understood that other suitable cross-sectional contours which will accommodate the fibers 50 may be used alternatively, such as a U-shaped cross-section or a V-shaped cross-section.

At the centers of the blocks 53, in the embodiment shown, the depth of the grooves 52 which mount the strands 50 is less than the diameter of the strands 50, while at the edges of the blocks 53, the depth of the grooves 52 is preferably at least as great as the diameter of the strands 50. Fiber optic material was removed from each of the strands 50A and 50B, e.g., by lapping to form respective oval-shaped planar surfaces, which are coplanar with the confronting surfaces of the blocks 53A, 53B. These oval surfaces, where the fiber optic material has been removed, will be referred to herein as the fiber "facing surfaces." Thus, the amount of fiber optic material removed increases gradually from zero towards the edges of the blocks 53 to a maximum towards the center of the blocks 53. This tapered removal of the fiber optic material enables the fibers to converge and diverge gradually, which is advantageous for avoiding backward reflection and excess loss of light energy.

In the embodiment shown, the coupler halves 51A and 51B are identical, and are assembled by placing the confronting surfaces of the blocks 53A and 53B together, so that the facing surfaces of the strands 50A and 50B are in facing relationship.

An index matching substance (not shown), such as index matching oil, is provided between the confronting surfaces of the blocks 53. This substance has a refractive index approximately equal to the refractive index of the cladding and also functions to prevent the optically flat surfaces from becoming permanently locked together. The oil is introduced between the blocks 53 by capillary action.

An interaction region 54 is formed at the junction of the strands 50, in which light is transferred between the strands by evanescent field coupling. It has been found that, to ensure proper evanescent field coupling, the amount of material removed from the fibers 50 must be carefully controlled so that the spacing between the core portions of the strands 50 is within a predetermined "critical zone". The evanescent fields extend into the cladding and decrease rapidly with distance outside their respective cores. Thus, sufficient material should be removed to permit each core to be positioned substantially within the evanescent field of the other. If too little material is removed, the cores will not be sufficiently close to permit the evanescent fields to cause the desired interaction of the guided modes, and thus, insufficient coupling will result. Conversely, if too much material is removed, the propagation characteristics of the fibers will be altered, resulting in loss of light energy due to mode perturbation. However, when the spacing between the cores of the strands 50 is within the critical zone, each strand receives a significant portion of the evanescent field energy from the other strand, and good coupling is achieved without significant energy loss. The critical zone includes that area in which the evanescent fields of the fibers 50A and 50B overlap with sufficient strength to provide coupling, i.e., each core is within the evanescent field of the other. However, as previously indicated, mode perturbation occurs when the cores are brought too close together. For example, it is believed that, for weakly guided modes, such as the $TE_{11}$ mode in single mode fibers, such mode perturbation begins to occur when sufficient material is removed from the fibers 50 to expose their cores. Thus, the critical zone is defined as that area in which the evanescent fields overlap with sufficient strength to cause coupling without substantial mode perturbation induced power loss.

The extent of the critical zone for a particular coupler is dependent upon a number of interrelated factors such as the parameters of the fiber itself and the geometry of the coupler. Further, for a single mode fiber having a step-index profile, the critical zone can be quite narrow. In a single mode fiber coupler of the type shown, the required center-to-center spacing between the strands 50 at the center of the coupler is typically less than a few (e.g., 2—3) core diameters.

Preferably, the strands 50A and 50B (1) are identical to each other; (2) have the same radius of curvature at the interaction region 54; and (3) have an equal amount of fiber optic material removed therefrom to form their respective facing surfaces. Thus, the fibers 50 are symmetrical, through the interaction region 54, in the plane of their facing surfaces, so that their facing surfaces are coextensive if superimposed, which ensures that the two fibers 50A and 50B will have the same propagation characteristics at the interaction region 54, and thereby avoids coupling attenuation associated with dissimilar propagation characteristics.

The blocks or bases 53 may be fabricated of any suitable rigid material. In one presently preferred embodiment, the bases 53 comprise generally rectangular blocks of fused quartz glass approximately 1 inch long, 1 inch wide, and 0.4 inch thick. In this embodiment, the fiber optic strands 50 are secured in the slots 52 by suitable cement, such as epoxy glue. One advantage of the fused quartz blocks 53 is that they have a coefficient of thermal expansion similar to that of glass fibers, and this advantage is particularly important if the blocks 53 and fibers 50 are subjected to any heat treatment during the manufacturing process. Another suitable material for the block 53 is silicon, which also has excellent thermal properties for this application.

The coupler includes four ports, labelled A, B, C, and D, in Figure 2. When viewed from the perspective of Figure 2, ports A and C, which correspond to strands 50A and 50B, respectively, are on the left-hand side of the coupler, while the ports B and D, which correspond to the strands 50A and 50B, respectively, are on the right-hand side of the coupler. For the purposes of discussion, it will be assumed that input light is applied to port A. This light passes through the coupler and is output at port B and/or port D, depending upon the amount of power that is coupled between the strands 50. In this regard, the term "normalized coupled power" is defined as the ratio of the coupled power to the total output power. In the above example, the normalized coupled power would be equal to the ratio of the power at port D of the sum of the power output at ports B and D. This ratio is also referred to as the "coupling efficiency", and when so used, is typically expressed as a percent. Thus, when the term "normalized coupled power" is used herein, it should be understood that the corresponding coupling efficiency is equal to the normalized coupled power times 100. In this regard, tests have shown that the coupler of the type shown in Figure 2 has a coupling efficiency of up to 100%. However, the coupler may be "tuned" to adjust the coupling efficiency to any desired value between zero and the maximum, by offsetting the facing surfaces of the blocks 53. Such tuning is preferably accomplished by sliding the blocks 53 laterally relative to each other.

The coupler is highly directional, with substantially all of the power applied at one side of the coupler being delivered to the other side of the coupler. That is, substantially all of the light applied to input Port A is delivered to the output Ports B and D, without contradirectional coupling to Port C. Likewise, substantially all of the light applied to input Port C is delivered to the output Ports B and D. Further, this directivity is symmetrical. Thus, light supplied to either input Port B or input Port D is delivered to the output Ports A and C. Moreover, the coupler is essentially non-discriminatory with respect to polarizations, and thus, preserves the polarization of the coupled light. Thus, for example, if a light beam having a vertical polarization is input to Port A, the light coupled from Port A to Port D, as well as the light passing straight through from Port A to Port B, will remain vertically polarized.

From the foregoing, it can be seen that the coupler may function as a beam-splitter to divide the applied light into two counter-propagating waves W1, W2 (Figure 1). Further, the coupler may additionally function to recombine the counter-propagating waves after they have traversed the loop 14 (Figure 1).

In the embodiment shown, each of the couplers 26, 34 has a coupling efficiency of about 50%, which provides maximum optical power at the photodetector 30 (Figure 1). As used herein, the term "coupling efficiency" is defined as the power ratio of the coupled power to the total output power, expressed as a percent. For example, referring to Figure 2, if light is applied to Port A, the coupling efficiency would be equal to the ratio of the power at Port D to the sum of the power output at Ports B and D. The terms "coupling ratio" or "splitting ratio" are defined as the coupling efficiency divided by 100. Thus, a coupling efficiency of 50% could be equivalent to a coupling ratio or splitting ratio of 0.5.

The polarizer 32

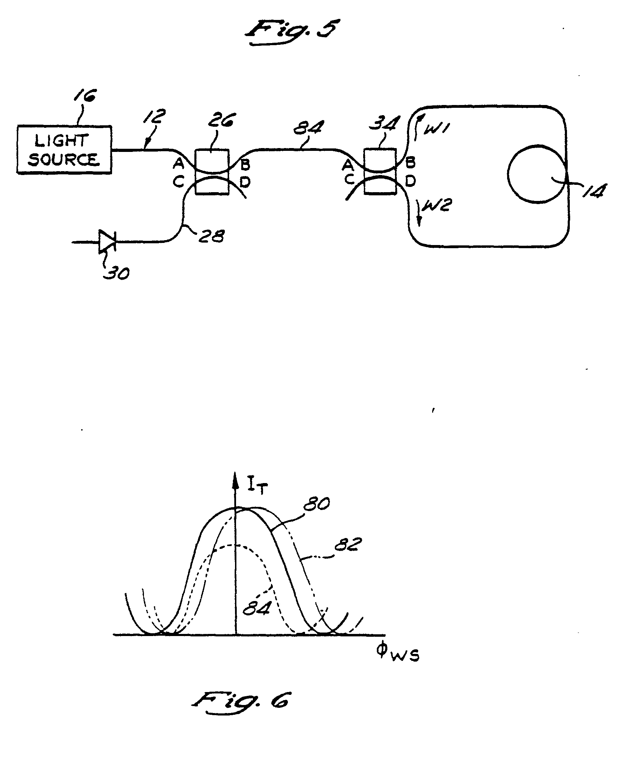

A preferred polarizer 32 for use in the rotation sensor of Figure 1, is illustrated in Figure 3 and described in *Optics Letters*, Vol. 5, No. 11 (Nov. 1980) pp. 479—481. The polarizer 32 includes a birefringent crystal 60, positioned within the evanescent field of light transmitted by the fiber 12. The fiber 12 is mounted in a slot 62 which opens to the upper face 63 of a generally rectangular quartz block 64. The slot 62 has an arcuately curved bottom wall, and the fiber is mounted in the slot 62 so that it follows the contour of this bottom wall. The upper surface 63 of the block 64 is lapped to remove a portion of the cladding from the fiber 12 is a region 67. The crystal 60 is mounted on the block 64, with the lower surface 68 of the crystal facing the upper surface 63 of the block 64, to position the crystal 60 within the evanescent field of the fiber 12.

The relative indices of refraction of the fiber 12 and the birefringent material 60 are selected so that the wave velocity of the desired polarization mode is greater in the birefringent crystal 60 than in the fiber 12, while the wave velocity of an undesired polarization mode is greater in the fiber 12 than in the birefringent crystal 60. The light of the desired polarization mode remains guided by the core portion of the fiber 12, whereas light of the undesired polarization mode is coupled from the fiber 12 to the birefringent crystal 60. Thus, the polarizer 32 permits passage of light in one polarization mode, while preventing passage of light in the other polarization mode. As previously indicated, the polarization controllers 24, 36 (Figure 1) may be utilized to adjust the polarizations of the applied light and optical output signal, respectively, so that optical power loss through the polarizer 32 is minimized.

The polarization controllers 24, 36

One type of polarization controller suitable for use in the rotation sensor of Figure 1 is illustrated in Figure 4. The controller includes a base 70 on which a plurality of upright blocks 72A through 72D are mounted. Between adjacents ones of the blocks 72, spools 74A through 74C are tangentially mounted on shafts 76A through 76C, respectively. The shafts 76 are axially aligned with each other, and are rotatably mounted between the blocks 72. The spools 74 are generally cylindrical and are positioned tangentially to the shafts 76, with the axes of the spools 74 perpendicular to the axes of the shafts 76. The strand 12 extends through axial bores in the shafts 76 and is wrapped about each of the spools 74 to form three coils 78A through 78C. The radii of the coils 78 are such that the fiber 12 is stressed to form a birefringent medium in each of the coils 78. The three coils 78A through 78C may be rotated independently of each other about the axes of the shafts 74A through 74C, respectively, to adjust the birefringence of the fiber 12 and, thus, control the polarization of the light passing through the fiber 12.

The diameter and number of turns in the coils 78 are such that the outer coils 78A and C provide a spatial delay of one-quarter wavelength, while the central coil 78B provides a spatial delay of one-half wavelength. The quater wavelength coils 78A and C control the ellipticity of the polarization, and the half wavelength coil 78B controls the direction of polarization. This provides a full range of adjustment of the polarization of the light propagating through the fiber 12. It will be understood, however, that the polarization controller may be modified to provide only the two quarter wave coils 78A and C, since the direction of polarization (otherwise provided by the central coil 78B) may be controlled indirectly through proper adjustment of the ellipticity of polarization by means of the two quarter wave coils 78A and C. Accordingly, the polarization controllers 24 and 36 are shown in Figure 1 as including only the two quarter wave coils 78A and C. Since this configuration reduces the overall size of the controllers 24—36, it may be advantageous for certain applications of the present invention involving space limitations.

Thus, the polarization controllers 24 and 36 provide means for establishing, maintaining, and controlling the polarization of both the applied light and the counter-propagating waves.

Operation without phase modulation or polarization control

In order to fully understand the function and importance of the polarizer 32 (Figure 1) and phase modulator 38, the operation of the rotation sensor will first be described as if these components had been removed from the system. Accordingly, Figure 5 shows the rotation sensor of Figure 1, in schematic block diagram form, with the modulator 38, polarizer 32, and associated components removed therefrom.

Light is coupled from the source 16 to the fiber 12 for propagation therethrough. The light enters Port A of the coupler 26, where a portion of the light is lost through Port D. The remaining portion of the light propagates from Port B of the coupler 26 to Port A of the coupler 34, where it is split into two counter-propagating waves W1, W2, the wave W1 propagates from the Port B in a clockwise direction about the loop 14, while the wave W2 propagates from Port D in a counter-clockwise direction around the loop 14. After the waves W1, W2 have traversed the loop 14, they are recombined by the coupler 34 to form an optical output signal, which propagates from Port A of the coupler 34 to Port B of the coupler 26. A portion of the optical output signal is coupled from Port B to Port C of the coupler 26 for propagation along the fiber 28 to the photodetector 30. This photodetector 30 outputs an electrical signal which is proportional to the intensity of the light impressed thereon by the optical output signal.

The intensity of the optical output signal will vary in accordance with the amount and type (i.e., constructive or destructive) of interference between the waves W1, W2 when they are recombined or superposed at the coupler path around the loop 14. Thus, assuming the loop 14 is at rest, when the waves W1, W2 are recombined at the coupler 34, they will interfere constructively, with no phase difference therebetween, and the intensity of the optical output signal will be at a maximum. However, when the loop 14 is rotated, the counter-propagating waves W1, W2 will be shifted in phase, in accordance with the Sagnac effect, so that when they are superposed at the coupler 34, they destructively interfere to reduce the intensity of the optical output signal. The Sagnac phase difference between the waves W1, W2, caused by rotation of the loop 14, is defined by the following relationship:

$$\phi_{ws} = \frac{8\eta NA}{\lambda c} \Omega \tag{1}$$

Where A is the area bounded by the loop 14 of optical fiber, N is the number of turns of the optical fiber about the area A, $\Omega$ is the angular velocity of the loop about an axis which is perpendicular to the plane of the loop, and $\lambda$ and c are the free space values of the wavelength and the velocity, respectively, of the light applied to the loop.

The intensity of the optical output signal ($I_T$) is a function of the Sagnac phase difference ($\phi_{ws}$) between the waves W1, W2, and is defined by the following equation:

$$I_T = I_1 + I_2 + 2\sqrt{I_1 I_2} \cos\phi_{ws} \tag{2}$$

where $I_1$ and $I_2$ are the individual intensities of the waves W1, W2, respectively.

From Equations (1) and (2), it may be seen that the intensity of the optical output signal is a function of the rotation rate ($\Omega$). Thus, an indication of such rotation rate may be obtained by measuring the intensity of the optical output signal, utilizing the detector 30.

Figure 6 shows a curve 80, which illustrates this relationship between the intensity of the optical output signal ($I_T$) and the Sagnac phase difference ($\phi_{ws}$) between the counter-propagating waves W1, W2. The curve 80 has the shape of a cosine curve, and the intensity of the optical output signal is at a maximum when the Sagnac phase difference ($\phi_{ws}$) is zero.

If it is assumed that the only source of phase difference between the counter-propagating waves W1, W2 is the rotation of the loop 14, the curve 80 will vary symmetrically about the vertical axis. However, in practice, a phase difference between the counter-propagating waves W1, W2 may be caused not only by rotation of the loop 14, but also by the residual birefringence of the optical fiber 12. Birefringence-induced phase differences occur because fiber birefringence tends to cause each of the two polarization modes of the single mode fiber 12 to propagate light at a different velocity. This creates a non-reciprocal, non-rotationally induced phase difference between the waves W1, W2, which causes the waves W1, W2 to interfere in a manner that distorts or shifts the curve 80 of Figure 6, for example, as illustrated by the curve 82, shown in phantom lines. Such birefringence-induced, non-reciprocal phase difference is indistinguishable from a rotationally-induced Sagnac phase difference, and is dependent on environmental factors which vary fiber birefringence, such as temperature and pressure. Thus, fiber birefringence may cause errors in rotation sensing.

Operation with the polarizer 32

The problem of non-reciprocal operation due to fiber birefringence is solved by means of the polarizer 32 (Figure 1) which, as discussed above, permits utilization of only a single polarization mode. Thus, when the polarizer 32 is introduced into the system, at the point designated by the reference numeral 84 in Figure 5, light input through the polarizer 32 propagates into the loop 14 in the desired polarization mode. Further, when the counter-propagating waves are recombined to form the optical output signal, any light that is not of the same polarization as the light applied to the loop is prevented from reaching the photodetector 30, since the optical output signal, as it travels from Port A of coupler 34 to Port B of coupler 26, also passes through the polarizer 32. Thus, the optical output signal, when it reaches the detector 30, will have precisely the same polarization as the light applied to the loop. Therefore, by passing the input light and optical output signal through the same polarizer 32, only a single optical path is utilized, thereby eliminating the problem of birefringence-induced phase difference. Further, it should be noted that the polarization controllers 24, 36 (Figure 1) may be used to adjust the polarization of the applied light, and optical output signal, respectively, to reduce optical power loss at the polarizer 32, and thus, maximize the signal intensity at the detector 30.

Operation with the phase modulator 38

Referring again to Figure 6, it will be seen that, because the curve 80 is a cosine function, the intensity of the optical output signal is nonlinear for small phase differences ($\phi_{ws}$) between the waves W1, W2. Further, the optical output signal intensity is relatively insensitive to changes in phase difference, for small values of $\phi_{ws}$. Such nonlinearity and insensitivity makes it difficult to transform the optical intensity ($I_T$) measured by detector 30 into a signal indicative of the rate of rotation $\Omega$ (Equation 1) of the loop 14.

Further, although birefringence-induced phase differences between the waves W1, W2 are eliminated, as discussed above, by use of the polarizer 32, fiber birefringence may also cause a reduction in the optical intensity of the optical output signal, since light may be prevented from reaching the photodetector 30 by the polarizer 32. Thus, changes in fiber birefringence may cause the amplitude of the curve 80 of Figure 6 to vary, for example, as illustrated by the curve 84.

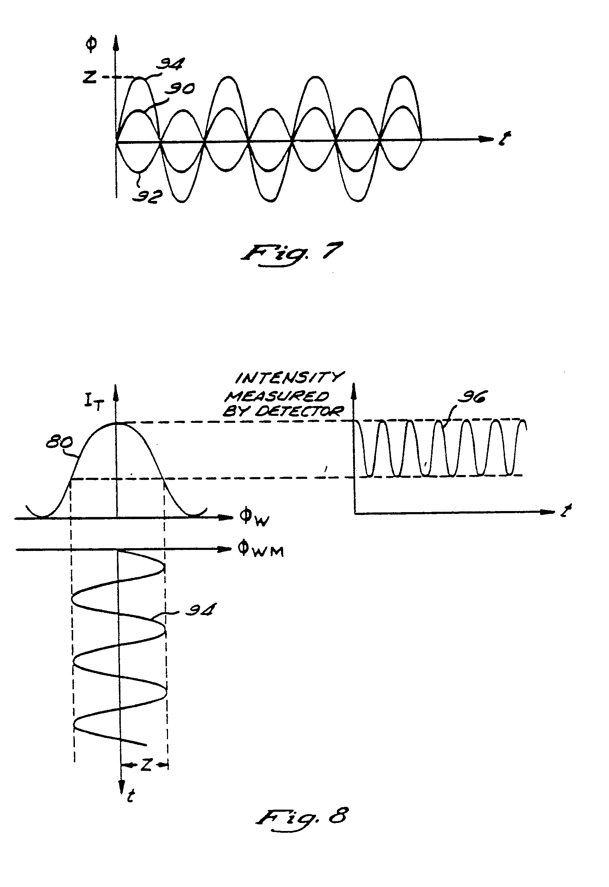

The foregoing problems are solved by means of a synchronous detection system utilizing the phase modulator 38, signal generator 40, and lock-in amplifier 46, shown in Figure 1. Referring to Figure 7, the phase modulator 38 modulates the phase of each of the propagating waves W1, W2 at the frequency of the signal generator 40. However, as may be seen from Figure 1, the phase modulator 38 is located at one end of the loop 14. Thus, the modulation of the wave W1 is not necessarily in phase with the modulation of the wave W2. Indeed, it is necessary for proper operation of this synchronous detection system that the modulation of the waves W1, W2 be out of phase. Referring to Figure 7, it is preferable that the modulation of the wave W1, represented by the sinusoidal curve 90, be 180 degrees out of phase with the modulation of the wave W2, represented by the curve 92. Use of a modulation frequency which provides such 180-degree phase difference between the modulation of the wave W1 relative to that of W2 is particularly advantageous in that it eliminates modulator-induced amplitude modulation in the optical output signal measured by the detector 30. This modulation frequency ($f_m$) may be calculated using the following equation:

$$f_m = \frac{c}{2n_{eq}L} \tag{3}$$

where L is the differential fiber length, between the coupler 34 and modulator 38, for the counter-propagating waves W1, W2 (i.e., the distance, measured along the fiber, between the modulator 38 and a symmetrical point on the other side of the loop 14); $n_{eq}$ is the equivalent refractive index for the single mode fiber 12, and c is the free space velocity of the light applied to the loop 14.

At this modulation frequency ($f_m$), the phase difference ($\phi_{wm}$) between the counter-propagating waves W1, W2, due to phase modulation of these waves in accordance with the curves 90 and 92, is illustrated by the sinusoidal curve 94 in Figure 7. This modulation of the phase difference between the waves W1, W2 will modulate the intensity ($I_T$) of the optical output signal in accordance with the curve 80 of Figure 6, since such phase modulation $\phi_{wm}$ is indistinguishable from rotationally-induced Sagnac phase differences $\phi_{ws}$.

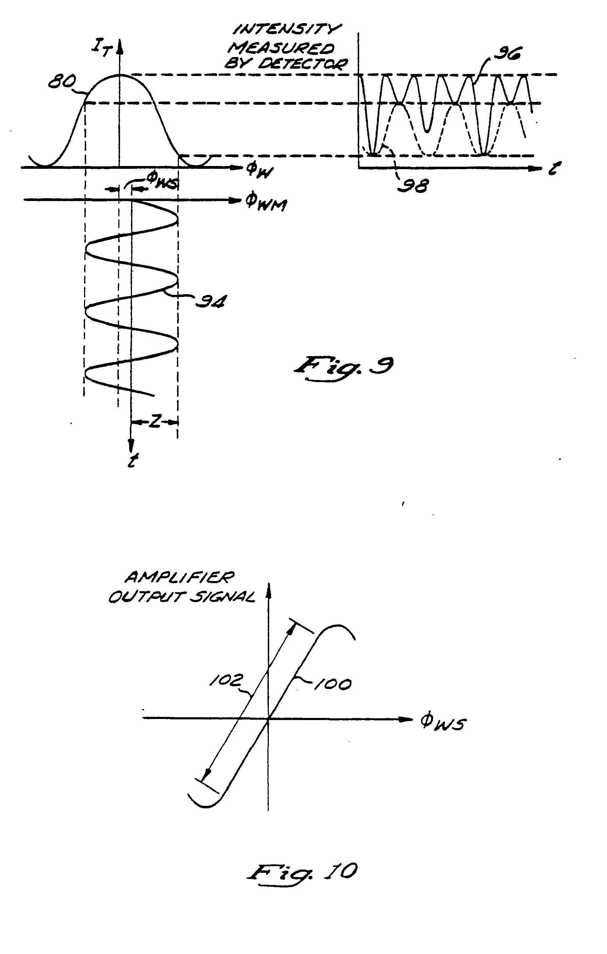

The foregoing may be understood more fully through reference to Figures 8 and 9 which graphically illustrate the effect of (a) the phase modulation $\phi_{wm}$, defined by the curve 94 of Figure 7, and (b) the Sagnac phase difference $\phi_{ws}$, upon the intensity ($I_T$) of the optical output signal, represented by the curve 80 of Figure 6. However, before proceeding with a discussion of Figures 7 and 8, it should first be understood that the intensity ($I_T$) of the modulated optical output signal is a function of the total phase difference between the waves W1, W2. Further, such total phase difference is comprised of both the rotationally-induced Sagnac phase difference $\phi_{ws}$ and the time varying modulation-induced phase difference $\phi_{wm}$. Thus, the total phase difference $\phi_w$ between the waves W1, W2 may be expressed as follows:

$$\phi_w = \phi_{ws} + \phi_{wm} \tag{4}$$

Accordingly, since the effects of the modulation-induced phase difference $\phi_{wm}$, as well as the rotationally-induced phase difference $\phi_{ws}$, will be considered in reference to Figures 8 and 9, the horizontal axis for the curve 80 has been relabelled as $\phi_w$ to indicate that the total phase difference is being considered, rather than only the rotationally-induced phase difference, as in Figure 6.

Referring now to Figure 8, the effect of the phase modulation $\phi_{wm}$ (curve 94) upon the intensity $I_T$ of the optical output signal (curve 80) will be discussed. In Figure 8, it is assumed that the loop 14 is at rest, and thus, the optical signal is not affected by the Sagnac effect. Specifically, it may be seen that the modulation-induced phase difference curve 94 varies the optical output signal in accordance with the curve 80, symmetrically about its vertical axis, so that the optical intensity measured by the detector 30 varies periodically at a frequency equal to the second harmonic of the modulating frequency, as shown by the curve 96. Since, as discussed above, the lock-in amplifier 46 is enabled by the signal generator 40 (Figure 1) to synchronously detect the detector output signal at the modulation frequency (i.e., first harmonic) of the modulator 38, and since the detector output signal is at the second harmonic of the modulation frequency, as shown by the curve 96, the amplifier output signal will be zero and the display 47 will indicate a rotation rate of zero. It should be noted that, even if birefringence-induced amplitude fluctuations occur in the optical output signal, as discussed in reference to the curve 84 of Figure 6, the curve 96 of Figure 8 will remain at a second harmonic frequency. Thus, such birefringence-induced amplitude fluctuations will not affect the amplifier 46 output signal. The detection system, therefore, provides a substantially stable operating point that is insensitive to changes in birefringence, particularly when the loop 14 is at rest.

When the loop 14 is rotated, the counter-propagating waves W1, W2 are shifted in phase, as discussed above, in accordance with the Sagnac effect. The Sagnac phase shift provides a phase difference $\phi_{ws}$ which adds to the phase difference $\phi_{wm}$ created by the modulator 38, so that the entire curve 94 is translated in phase from the position shown in Figure 8, by an amount equal to $\phi_{ws}$, to the position shown in Figure 9. This causes the optical output signal to vary non-symmetrically in accordance with the curve 80, thereby harmonically distorting this signal, as shown by the curve 96 of Figure 9, so that it includes a component at the fundamental (i.e., first harmonic) frequency of the modulator 38, as illustrated in phantom lines by the sinusoidal curve 98. It will be seen subsequently that the RMS value of this sinusoidal curve 98 is proportional to the sine of the rotationally-induced, Sagnac phase difference $\phi_{ws}$. Since the amplifier 46 synchronously detects signals having the fundamental frequency of the modulator 38, the amplifier 46 will output a signal to the display 47 that is proportional to the RMS value of the curve 98 to indicate the rotation rate of the loop.

The drawings of Figure 9 illustrate the intensity waveform of the optical output signal for one direction of rotation (e.g., clockwise) of the loop 14. However, it will be understood that, if the loop 14 is rotated in the opposite direction (e.g., counter-clockwise) at an equal velocity, the intensity waveform 96 of the optical output signal will be exactly the same as illustrated in Figure 9, except that it will be translated so that the curve 98 is shifted 180 degrees from the position shown in Figure 9. The lock-in amplifier 46 detects this 180-degree phase difference for the curve 98, by comparing its phase with the phase of the reference signal from the signal generator 40, to determine whether the rotation of the loop is clockwise or counter-clockwise. Depending on the direction of rotation, the amplifier 46 outputs either a positive or negative signal to the display 47. However, regardless of the direction of rotation, the magnitude of the signal is the same for equal rates of rotation of the loop 14.

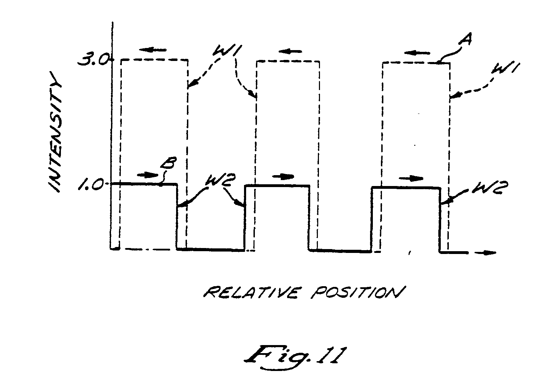

The waveform of the amplifier output signal is shown in Figure 10 as the curve 100. It will be seen that this curve 100 is sinusoidal and varies positively or negatively from zero rotation rate depending on whether the rotation of the loop 14 is clockwise or counter-clockwise. Further, the curve 100 has a substantially linear portion 102 which varies symmetrically about the origin and provides a relatively wide operating rate for measuring rotation. Moreover, the slope of the curve 100 provides excellent sensitivity throughout its linear operating range 102.

Thus, by utilizing the synchronous detection system, the above-described problems of non-linearity, insensitivity, and birefringence-induced amplitude fluctuations are reduced or eliminated.

A further advantage of this detection system relates to the fact that state-of-the-art phase modulators, such as the modulator 38, induce amplitude modulation in the optical output signal, either directly, or indirectly through polarization modulation. However, it will be recalled from the discussion in reference to Equation 3 that, by operating at a specific frequency at which the phase difference between the modulation of the waves W1 and W2 is 180 degrees, the odd harmonic frequency components of the amplitude modulation, that are induced in each of the counter-propagating waves W1, W2 by the modulator 38, cancel each other when the waves are superposed to form the optical output signal. Thus, since the above-described detection system detects only an odd harmonic (i.e., the fundamental frequency) of the optical output signal, the effects of amplitude modulation are eliminated. Therefore, by operating at the specific frequency, defined by Equation 3, and detecting only an odd harmonic of the optical output signal, the rotation sensor of the present invention may operate independently of modulator-induced amplitude and polarization modulation.

A further benefit of operating at the specific frequency is that even harmonics of the phase modulation, induced by the modulator 38 in each of the counter-propagating phases W1, W2, cancel when these waves are superposed to form the optical output signal. Since these even harmonics may produce spurious odd harmonics in the optical output signal which might otherwise be detected by the detection system, their elimination improves the accuracy of rotation sensing.

In addition to operating the phase modulator 38 at the frequency, defined by Equation 3, it is also preferable to adjust the magnitude of the phase modulation so that the amplitude of the detected first harmonic of the optical output signal intensity is maximized, since this provides improved rotation sensing sensitivity and accuracy. It has been found that the first harmonic of the optical output signal intensity is at the maximum, for a given rotation rate, when the amplitude of the modulator-induced phase difference between the waves W1, W2, indicated by the dimension labelled z in Figures 7, 8, and 9, is 1.84 radians. This may be understood more fully through reference to the following equation for the total intensity $(I_T)$ of two superposed waves having individual intensities of $I_1$ and $I_2$, respectively, with a phase difference $\phi_w$ therebetween.

$$I_T = I_1 + I_2 + 2\sqrt{I_1 I_2}\ \cos\phi_w \tag{5}$$

where:

$$\phi_w = \phi_{ws} + \phi_{wm} \tag{6}$$

and

$$\phi_{wm} = z\ \sin(2\pi f_m t) \tag{7}$$

Thus,

$$\phi_w = \phi_{ws} + z\ \sin\ (2\pi f_m t) \tag{8}$$

the Fourier expansion of cosine $\phi_w$ is:

$$\cos \phi_w = \cos \phi_{ws}\{J_0(z) + 2 \sum_{n=1}^{\infty} J_{2n}(z)\cos[2\pi(2nf_m t)]\}$$

$$-\sin \phi_{ws}\{2 \sum_{n=1}^{\infty} J_{2n-1}(z)\sin[2\pi(2n-1)f_m t]\} \qquad (9)$$

where $J_n(z)$ is the $n^{th}$ Bessel function of the variable z, and z is the peak amplitude of the modulator-induced phase difference between the waves W1, W2.

Therefore, detecting only the first harmonic of $I_T$ yields:

$$I_{T(1)} = 4\sqrt{I_1 I_2} \; J_1(z)\sin \phi_{ws}\sin(2\pi f_m t) \qquad (10)$$

Thus, the amplitude of the first harmonic of the optical output signal intensity is dependent upon the value of the first Bessel function $J_1(z)$. Since $J_1(z)$ is a maximum when z equals 1.84 radians, the amplitude of the phase modulation should preferably be selected so that the magnitude of the modulator-induced phase difference (z) between the waves W1, W2 is 1.84 radians.

Reducing the effects of backscatter

As is well known, present state-of-the-art optical fibers are not optically perfect, but have imperfections which cause scattering of small amounts of light. This phenomena is commonly referred to as rayleigh scattering. Although such scattering causes some light to be lost from the fiber, the amount of such loss is relatively small, and therefore, is not a major concern. The principal problem associated with rayleigh scattering relates not to scattered light which is lost, but rather, to light which is reflected so that it propagates through the fiber in a direction opposite to its original direction of propagation. This is commonly referred to as "backscattered" light. Since such backscattered light is coherent with the light comprising the counter-propagating waves W1, W2, it can constructively or destructively interfere with such propagating waves, and thereby cause "noise" in the system, i.e., cause spurious variations in the intensity of the optical output signal, as measured by the detector 30.

Destructive or constructive interference between the backscattered waves and the propagating waves may be reduced by means of an additional phase modulator at the center of the fiber loop 14. This phase modulator is driven by a signal generator (not shown), which is not synchronized with the modulator 38.

The propagating waves will pass through this additional phase modulator one time only, on their travel around the loop. For backscatter which occurs from a propagating wave before the wave reaches the additional modulator, the backscatter will not be phase modulated by this additional modulator, since neither its source propagating wave nor the backscatter itself has passed through the additional modulator.

On the other hand, for backscatter which occurs from a propagating wave after the wave passes through this additional phase modulator, the backscatter will be effectively twice phase modulated, once when the propagating wave passed through the additional phase modulator, and once the backscatter passed through the additional modulator.

Thus, if the additional phase modulator introduces a phase shift of $\phi$ (t), the backscattered wave originating at any point except at the center of the loop 14 will have a phase shift of either zero, or 2 $\phi$ (t), either of which is time varying with respect to the $\phi$ (t) phase shift for the propagating wave. This time varying interference will average out over time, effectively eliminating the effects of the backscattered light.

Kerr effect compensation

As previously indicated, the Kerr effect refers to a phenomenon in which the refractive index of a substance changes in the presence of a varying electric field. In a non-linear medium the optical Kerr effect may induce an unequal phase delay for counter-propagating waves. Fused silica optical fibers such as the fiber 12 are sufficiently non-linear that the Kerr-induced phase difference in a fiber optic rotation sensor may be much larger than the phase difference due to the Sagnac effect.

The optical Kerr effect manifests itself as intensity-dependent perturbations of the propagation constants of the fiber 12. The perturbations of the propagation constants are functions of the states of polarization of the two counter-propagating waves. Therefore, in a fiber rotation sensor it is preferable that the states of polarization of the counter-propagating waves be identical. The polarizer 32 permits utilization of only a single polarization mode in the loop 14. Therefore, in the following analysis of the Kerr it is assumed that the counter-propagating waves have identical, linear polarizations.

The perturbations of the propagating constants of the counter-propagating waves are:

$$\beta k_1(z,t) = \frac{4\pi\eta n}{\lambda}\delta[I_1(z,t) + 2I_2(z,t)] \qquad (11)$$

$$\beta k_2(z,t) = \frac{4\pi\eta n}{\lambda} \delta[I_2(z,t) + 2I_1(z,t)] \qquad (12)$$

where $\eta$ is the impedance of the medium, $\lambda$ is the vacuum wavelength of the waves, n is the Kerr coefficient of the medium, and $\delta$ is a factor of order unity that depends on the transverse distribution of the light mode in the fiber 12. $I_1(z,t)$ and $I_2(z,t)$ are the wave transverse peak intensities, which depend upon the displacement around the loop and upon time.

An important feature of Equations 11 and 12 is the factor of 2 between $I_1$ and $I_2$ that shows, that the intensity of wave 2 has twice the effect on the propagation constant of wave 1 as does the intensity of wave 1 on itself. The term "self effect" is used herein to refer to the effect which the electric field of a lightwave has upon the propagation constant seen by the same lightwave. The term "cross effect" is used herein to refer to the change in propagation constant of the lightwave caused by the electric field of another lightwave which propagates in the opposite direction. Referring to Equation 12, the cross effect of wave 1 on the propagation constant of wave 2 is twice the self-effect of wave 2. The cross effects being twice the self effects gives rise to a non-reciprocity by causing the perturbations of the propagation constants to be different if the intensities $I_1$ and $I_2$ are not the same. No non-reciprocity would occur if the perturbations were to depend simply on the sum of the two intensities and no non-reciprocity would occur if the intensities $I_1$ and $I_2$ were the same because then $I_1+2I_2=I_2+2I_1$.

The non-reciprocity causes the propagation velocities of the 2 waves, W1 and W2, to be different because propagation velocity is a function of the propagation constant. Therefore, one of the waves, W1, W2 will traverse the loop 14 more rapidly than the other, thereby creating a phase difference between the waves W1, W2 at the coupler 34. The Kerr effect-induced phase difference is indistinguishable from a rotationally-induced phase difference, thereby resulting in a spurious rotation signal.

As explained in *Optics Letters*, Vol. 7, No. 6 (June 1982) pp. 282—284, modulation of the waves, W1 and W2, in accordance with a specific waveform, serves to reduce or eliminate the relative influence of the cross effect. According to that article, as the waves, W1 and W2, propagate, the cross effect is particularly important in giving rise to Kerr effect-induced phase differences. The use of modulation to control the phase shift caused by the Kerr effect may be more easily understood through reference to Figure 11, which illustrates a pair of square wave intensity modulated counter-propagating lightwaves, which each have a duty cycle of 50%. The cross effect is present when the intensities of the two waves, W1 and W2, have coincident peaks; otherwise the cross effect is absent; and each wave W1, W2, experiences only the self effect. Each portion of the waves, W1, W2, experiences the self effect all the time and the cross effect half of the time because of the 50% duty cycle. Therefore, the factor of 2 in equations 11 and 12 is reduced to an average value of unity, thereby effectively cancelling the non-reciprocity. Non-reciprocal phase accumulated over half of the cycle is compensated for by the non-reciprocal phase of the opposite sign accumulated by an adjustment in the duty cycle of the pulse train in order to obtain full compensation. Still referring to Figure 11, it will be assumed for purposes of illustration that wave W1 has a peak intensity of 3 in some arbitrary units while the wave W2 has a peak intensity of 1 in the same units. Part of the square wave corresponding to peak intensity is referred to as the crest portion and the part of the square wave that is at zero intensity is referred herein as the trough portion.

Because of the Kerr effect, the propagation constant seen by the trough portion of a given wave will be different than the propagation constant seen by the crest portion of that same wave. In this particular example, the intensity of the wave at the trough portions is negligible and it will not contribute to the rotation rate error, so it may be ignored. Thus, in this example, only the propagation constant seen by the crest portions need be examined to determine the intensity weighted average phase shift of the waves.

Because of the Kerr effect, the propagation constant of the crest portions of either of the waves W1, W2 will change as the wave travels through successive crest and trough portions of the oncoming wave. For example, if one imagines an observer at an arbitrary reference point on the crest portion of the wave W1, as at point A in Figure 11, travelling with the wave W1, the propagation constant seen by that observer will be at a first value when point A is within a crest portion of the oncoming wave W2, and will be at a second value when point A is within a trough portion of the oncoming wave W2. Since the duty cycle of the wave W2 is 50%, and the observer sees trough portions and crest portions of this wave an equal amount of time, the average propagation constant of the wave W1 (e.g., seen by the observer at point A) will simply be the average of the sum of these first and second values. The situation is similar for an observer travelling with the wave W2 on its crest portion, as at the reference point B in Figure 11. The propagation constant of the wave W2 (e.g., seen by the point B observer) will change between first and second values as it travels through successive crest and trough portions of the oncoming wave W1, i.e., the propagation constant will be at a first value when point B is within a crest portion of the wave W1 and at the second value when point B is within a trough portion of the wave W1. Since the wave W1 also has a 50% duty cycle, the average propagation constant of the wave W2 (e.g., the point B observer) is the average of the sum of these first and second values. It should be noted that the first and second values for the wave W1 may be different than those for the wave W2, however, if the Kerr effect is fully compensated, the average propagation constants for the waves W1 and W2 will be the same.

EP 0 124 524 B1

The average, Kerr-induced change in propagation constants for each of the waves W1, W2 will now be calculated for the example described above in reference to Figure 11. For the wave W1, the Kerr-induced change in propagation constant ($\Delta\beta_1$) seen, e.g., at point A, when point A is within a crest of the oncoming wave W2, may be defined as:

$$\Delta\beta_1 = k(I_1 + 2I_2) \tag{11a}$$

However, when point A is within a trough of the oncoming wave W2, the Kerr-induced change in propagation constant ($\beta_1$) seen by the wave W1 at point A is:

$$\Delta\beta_1 = k(I_1) \tag{12a}$$

where $I_1$ and $I_2$ are the intensities of the waves W1, W2, respectively. The constant k is included as a proportionality constant.

From Equations 11a and 12a, it may be seen that, as expected, when point A of the wave W1 is within a crest of the oncoming wave W2, there is both a self-effect (due to W1) and a cross-effect (due to W2), while, when point A is within a trough of the oncoming wave, there is only a self-effect.

Substituting the appropriate values into Equations 11a and 12a, it may be seen that when point A is within a crest, the change in propagation constant is equal to 5k, and when it is within a trough, the change in refractive index is 3k. Thus, the average propagation constant of the wave W1 is equal to 4k.

For the wave W2, the change in propagation constant when point B is within a crest of the oncoming wave W1, may be defined as:

$$\Delta\beta_2 = k(I_2 + 2I_1) \tag{13}$$

However, when point B of the wave W2 is within a trough of the oncoming wave W1, the change in propagation constant is:

$$\Delta\beta_2 = k(I_2) \tag{14}$$

Inserting the appropriate intensity values into Equation 13, the change in propagation constant, when point B is within a crest portion of the oncoming wave, is equal to 6k. Similarly, using Equation 14, it may be found that the change in propagation constant, when point B is within a trough of the oncoming wave, is equal to 1k. Since the duty cycle is 50%, and the wave W2 has each propagation constant an equal amount of time, the average propagation constant is simply the average of 1k+7k, which is, again, 4k.

Therefore, even though the respective intensities of the waves W1, W2, in the above example, were quite different, the average change in the propagation constant for each of the waves was the same (e.g., 4k) over a complete period of square wave modulation. Using other intensities for the waves W1, W2 should yield the same results.

The Kerr-induced rotation rate error $\Omega_k$, for the rotation sensor of the preferred embodiment, is a function of the intensity weighted average of the phase differences between the waves. Also, the detection system described above provides a signal proportional to the intensity weighted average of the non-reciprocal (Kerr-induced) phase shift. Accordingly, the Kerr-induced rotation rate error may be expressed mathematically as follows:

$$\Omega_k = \frac{c}{R}\, \eta n \delta (1-2K)\, \frac{<I_0^2(t)> - 2<I_0(t)>^2}{<I_0(t)>} \tag{15}$$

where c is the velocity of light in a vacuum, R is the radius of the fiber coil, $\eta$ is the impedance of the medium, n is the Kerr coefficient of the medium, $\delta$ is a factor on the order of unity that depends upon the transverse distribution of the mode, K is the coupling ratio, $I_0(t)$ is the intensity of the modulated source wave as a function of time. The angled brackets indicate an average over time.

The Kerr-induced rotation rate error $\Omega_k$, for the rotation sensor of the preferred embodiment, is a function of the intensity weighted average of the phase differences between the waves. Also, the detection system described above provides a signal proportional to the intensity weighted average of the non-reciprocal (Kerr-induced) phase shift.

Referring back to Equation 15, it may be seen that non-reciprocal operation caused by the Kerr effect may be eliminated, at least theoretically, by adjusting the coupler 34 so that the splitting ratio is 0.5 and the waves W1, W2 are equal in intensity. However, to achieve sufficient Kerr compensation for inertial navigation applications, requiring an accuracy of .001 deg/h, it is estimated that the splitting ratio of the coupler 34 would need to be adjusted within a tolerance on the order of magnitude of $0.5 \pm 10^{-4}$, assuming a cw source. In practice, it appears that this is not possible, or is at least impractical, even under laboratory conditions. It is believed that the best achievable tolerance under laboratory conditions would be no more than about $0.5 \pm 10^{-3}$, which would not provide sufficient Kerr compensation for many applications.

13

Moreover, maintaining such a tolerance would be very difficult, particularly in commercial applications where the interferometer is subjected to vibration or other physical disturbances, as in aircraft gyroscopes.

Kerr compensation with thermal sources

When used with the apparatus described herein, and according to the method of the present invention, a large class of light sources 10 provide the intensity variations required to compensate for Kerr effect induced errors in rotation sensors. The relation between the rotation rate error $\Omega_K$ and the source intensity, I(t) is:

$$\Omega_K \propto <I^2(t)>_T - 2<I(t)<I(t)>_{2_\tau}>_T \tag{17}$$

where the angled brackets indicate time averaging over time intervals T or $2_\tau$, as indicated by the subscripts where T is the detection system integration time, and $\tau$ is the transit time of light around the fiber loop 14. Assuming that the average intensity is established over a time $2_\tau$, Equation (17) becomes:

$$\Omega_K \propto <I^2(t)> - 2<I(t)>^2 \tag{18}$$

In the following, it is assumed that I(t) is a stochastic process varying randomly with time; that the average value of I(t) is constant with respect to time; and that I(t) is ergodic so that the occurrence of any particular value is equally likely. By defining I=I(t) and identifying the variance as $\sigma_I^2$ permits Equation 18 to be written as:

$$\sigma_I^2 = \overline{I^2} - \overline{I}^2 \tag{19}$$

where the bar over a quantity indicates an ensemble average or mean value.

$$\Omega_K \alpha \quad \sigma_I^2 - \overline{I}^2 \tag{20}$$

which shows that the rotation rate error induced by the Kerr effect vanishes if the standard deviation, $\sigma_I$, is equal to the mean value, I, of the intensity. Polarized thermal light, such as is output by a superluminescent diode, satisfies the condition that $\sigma_I = I$. Therefore, polarized thermal light may be used to provide a rotation sensor which is insensitive to the Sagnac effect.

By virtue of the central limit theorem, which is a well-known mathematical relationship, the amplitude of polarized thermal light is a circular complex Gaussian random process. The corresponding intensity is a random process with an exponential probability density defined by:

$$p(I) = \begin{cases} \dfrac{1}{\overline{I}} \exp - \dfrac{I}{\overline{I}} & I \geqslant 0 \\ \\ 0 & I < 0 \end{cases} \tag{21}$$

The second moment of the intensity of polarized thermal light is:

$$\overline{I^2} = \int_0^\infty \frac{I^2}{\overline{I}} \exp \left( \frac{-I}{\overline{I}} \right) dI \tag{22}$$

which after integration by parts becomes:

$$\overline{I^2} = 2\overline{I}^2 \tag{23}$$

Therefore, referring to Equation 18, when polarized thermal light is used in the rotation-sensing device described herein, the Kerr effect produces no error in the sensed rotation rate.

Kerr compensation with multimode source

Laser light comprising a number of oscillatory modes, or frequencies, i.e., multimode lasers, may also be used in the rotation sensing device described herein to provide a lower rotation rate error than is possible with unmodulated light of a single frequency.

It is assumed that the laser cavity (not shown) is dispersive such that the laser oscillatory modes are not evenly spaced in frequency as is the case with diode lasers. The light amplitude in the dispersive case is the sum of the contributions of the individual modes and may be expressed as:

$$A(t) = \sum_{n=1}^{N} A_n e^{if(n) \omega t} \tag{24}$$

14

Where $A_n$ and $f(n)\omega$ are the complex amplitude and frequency, respectively of the $n^{th}$ oscillating mode; and N is the number of modes or frequencies at which the cavity oscillates. A similar result is obtained without dispersion if the phases of each of the modes are random and statistically independent. Neglecting the finite line width of the individual modes and expanding f(n) in a Taylor series gives:

$$A(t)= \sum_{n=1}^{N} A_n e^{i\ (\omega+n\Delta\omega+n^2\delta\omega+\ldots)t} \qquad (25)$$

The corresponding intensity is:

$$I(t)=A(t)A^*(t)= \sum_{n,m=1}^{N} A_n A_m e^{i[(n-m)\Delta\omega+(n^2-m^2)\delta\omega+\ldots]t} \qquad (26)$$

The average intensity is the sum of the averages of the individual terms. The averages of the exponentials are zero unless n=m, which yields:

$$<I(t)>= \sum_{n=1}^{N} |A_n|^2 \qquad (27)$$

The square of the intensity is:

$$I^2(t)= \sum_{n,m,l,k=1}^{N} A_n A_m A_l A_k e^{i[(n-m+l-k)\Delta\omega+(n^2-m^2+l^2-k^2)\delta\omega+\ldots]t} \qquad (28)$$

The time average of the exponentials is zero unless $n-m+l-k=0$ and $n^2-m^2-l^2-k^2=0$. For the possibility that n=m, it is required that l=k in order that $I(t) \neq 0$. If $n\neq m$, then it is required that n=k and m=l in order that $I(t) \neq 0$. The foregoing restrictions on n, m, l and k cause all the terms in the exponent of Equation 28 to vanish, giving:

$$<I^2(t)>= \sum_{n,l=1}^{N} |A_n|^2|A_1|^2+ \sum_{n,m=1}^{N} |A_n|^2|A_m|^2- \sum_{n=1}^{N} |A_n|^4 \qquad (29)$$

which may be expressed as:

$$<I^2(t)>=2<I(t)>^2- \sum_{n=1}^{N} |A_n|^4 \qquad (30)$$

The foregoing assumes amplitudes which are constant with respect to time. In order to account for the finite times over which the time averaged values were determined in applying Equation 30, it is sufficient that $2\phi\{\tau>>1$ and $\phi\{T>>1$, which are not overly restrictive since $\tau$ is on the order of microseconds, and T is on the order of seconds.

Consideration of the case of N equal amplitude modes such that

$$|A_n|^2=\frac{1}{N}|A|^2 \qquad (31)$$

yields:

$$\Omega_k\alpha\frac{<I^2(t)>-2<I(t)>^2}{<I(t)>^2}=-\frac{1}{N} \qquad (32)$$

which shows that the Kerr-induced rotation rate error is inversely proportional to the number of oscillating modes of the laser.

Experimental results

A working model of the rotation sensor described herein employed a GaAs laser diode as the light source 10. This particular laser diode has more than 50 oscillating modes and 10 oscillating modes within the full width of the half maximum power points of the laser output spectrum. The light source 10 inserted an average of about 120 microwatts of power into the fiber 12 and about 10 microwatts were received by the detector 30.

The relative amounts of power of the counterpropagating waves in the loop 14 were adjusted by tuning the coupling ratio K of the coupler 34. If the intensity of the counterpropagating waves were constant in time, the rotation sensor would suffer a rotation rate error due to the optical Kerr effect of up to approximately 10 degrees per hour. No such error was observed within the limits of accuracy of the measurements when the multimode laser described hereinabove was used as the light source 10. Within the experimental accuracy, the fluctuating intensity light source 10 produced a Kerr induced rotation rate error which was less than 1% of the predicted error for a constant intensity source.

Adjustment of the polarization controller 36 to vary the polarization of the counterpropagating waves did not produce a Kerr induced rotation rate error, which is in agreement with theoretical predictions that Kerr effect compensation using the apparatus and methods of the present invention is independent of polarization.

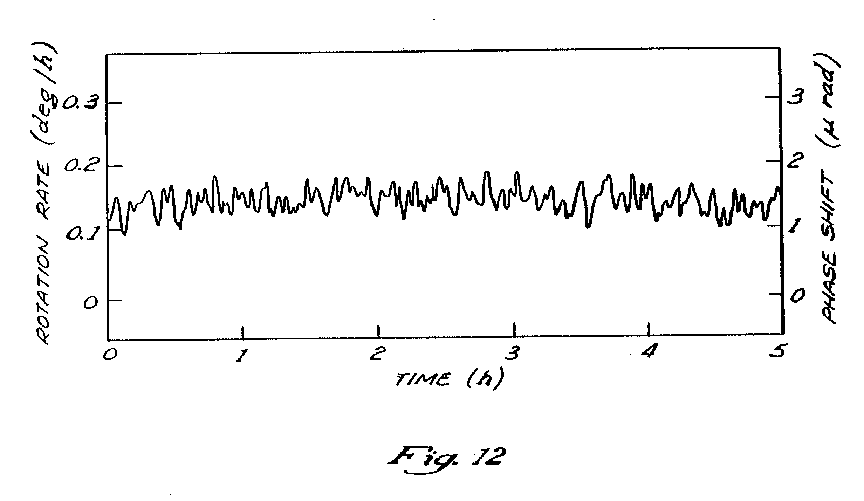

Figure 12 illustrates the rotation signal from the rotation sensing device of the invention for a five hour period. Figure 12 illustrates that the present invention provides a substantial improvement in the long-term stability of fiber optics rotation sensing systems. The offset of just over 0.1 deg/h, which is about 1% of the earth's rotation rate, as measured by turning off the light source 10 may reflect unaccuracy in the orientation of the axis of the coil 14, which should be perpendicular to the earth's axis of rotation. The curve exhibits an RMS short-term noise value of 0.02 deg/h, which is due to the electronics of the system.

If the light source 10 does not provide an output having a sufficient number of oscillatory modes to produce satisfactory Kerr effect compensation, a modulator 13 may be included between the light source 10 and the lens 15. Ordinarily the modulator 13 will modulate the output of the light source 10 so that counter propagating light waves having 50% duty cycles are coupled into the loop 14.

For example, if the light source 10 outputs two frequencies which beat together to have a duty cycle of 67%, the modulator 13 provides modulation to reduce the duty cycle to 50%. Such modulation may be provided by square wave modulation of the output of the light source 10.

## Claims

1. A fiber optic interferometer with reduced Kerr effect induced rotation rate error, comprising:
a multimode light source (10) emitting a total light signal, said total light signal being the sum of the signals for each mode and having a plurality of frequencies;
a loop (14) of fiber optic material; and
a coupler (34) for coupling light from the source to the loop (14) to provide first and second lightwaves in said loop for propagation in opposite directions about said loop, characterized in that the field amplitude of the total signal of the light emitted by said multimode light source is such that the difference between the average value of the square of the intensity of said total signal and twice the square of the average value of the intensity of said total signal is sufficiently small so as to substantially decrease the rotation rate error due to the Kerr effect to a value less than or equal to 0.1 degree per hour, whereby the differences in the average propagation constants for said waves are reduced.

2. A fiber optic interferometer as defined in Claim 1, characterized in that said multimode light source has a discrete number of modes and a duty cycle substantially equal to 50%, said duty cycle being achieved by selecting a number of modes sufficiently high to decrease said Kerr effect rotation rate error for a given average intensity of said total light signal.

3. A fiber optic interferometer as defined in Claim 1 or 2, additionally characterized by a modulator (13) for modulating the light intensity from said light source, said modulator cooperating with the variations in the light signal emitted by said light source to further reduce the differences in the average propagation constants for the waves.

4. A fiber optic interferometer as defined in Claim 3, characterized in that the modulator (13) is disposed to receive light from the light source (10).

5. A fiber optic interferometer as defined in any of Claims 1—4, characterized in that the fiber optic material is single mode for said plurality of frequencies of said light source (10).

6. A fiber optic interferometer as defined in any of Claims 1—5, characterized in that said light source emits substantially polarized thermal light whose intensity is a stochastic, stationary and ergodic process.

7. A fiber optic interferometer as defined in any of Claims 1—6, characterized in that said light source (10) is a superluminescent diode.

8. A fiber optic interferometer as defined in any of Claims 1—7, characterized in that said light source (10) comprises a multimode source having a deterministic phase relationship between said modes.

9. A fiber optic interferometer as defined in any of Claims 1—7, characterized in that said light source (10) comprises a multimode light source having a random phase relationship between said modes.

10. A fiber optic interferometer as defined in any of Claims 1—9, characterized in that said light source (10) has at least 50 axial modes.

11. A method for reducing the Kerr effect induced error in a fiber optic ring interferometer, characterized by the steps of:

selecting a light source (10) having a plurality of frequencies to produce intensity modulated light in which the average value of the square of the intensity is substantially equal to twice the average value of the intensity squared so as to substantially decrease the rotation rate error due to the Kerr effect to a value less than or equal to 0.1 degree per hour;

coupling light into the interferometer such that first and second counterpropagating waves travel therethrough;

combining the counterpropagating waves to produce an interference pattern; and

detecting intensity variations in the interference pattern.

**Patentansprüche**

1. Faseroptisches Interferometer mit vermindertem durch Kerr-Effekt induziertem Rotationsratenfehler, umfassend:

Eine Multimodus-Lichtquelle (10), die ein totales Lichtsignal emittiert, wobei das totale Lichtsignal die Summe der Signale für jeden Modus ist und eine Vielzahl von Frequenzen aufweist;

eine Schleife (14) aus faseroptischem Material; und

einen Koppler (34) zum Koppeln von Licht von der Quelle zu der Schleife (14), um erste und zweiten Lichtwellen in der Schleife zur Fortpflanzung in entgegengesetzten Richtungen um die Schleife herum zu liefern, dadurch gekennzeichnet, daß die Feldamplitude des totalen Signals des von der Multimodus-Lichtquelle emittierten Lichts derart ist, daß die Differenz zwischen dem Mittelwert des Quadrats der Intensität des totalen Signals und dem Zweifachen des Quadrats des Mittelwerts der Intensität des totalen Signals so ausreichend klein ist, daß der auf dem Kerr-Effekt beruhende Rotationsratenfehler beträchtlich auf einen Wert von weniger oder gleich 0,1 Grad pro Stunde vermindert wird, wodurch die Unterschiede in den durchschnittlichen Fortpflanzungskonstanten für die Wellen vermindert sind.

2. Faseroptisches Interferometer nach Anspruch 1, dadurch gekennzeichnet, daß die Multimodus-Lichtquelle eine diskrete Anzahl von Moden und ein Taktverhältnis von im wesentlichen gleich 50% besitzt, und daß das Taktverhältnis dadurch erreicht wird, daß eine ausreichend hohe Anzahl von Moden ausgewählt wird, um den auf dem Kerr-Effekt beruhenden Rotationsratenfehler für eine vorgegebene Durchschnittsintensität des totalen Lichtsignals zu vermindern.

3. Faseroptisches Interferometer nach Anspruch 1 oder 2, zusätzlich gekennzeichnet durch einen Modulator (13) zur Modulation der Lichtintensität aus der Lichtquelle, wobei der Modulator mit den Variationen in dem von der Lichtquelle emittierten Lichtsignal zusammenwirkt, um die Unterschiede in den durchschnittlichen Fortpflanzungskonstanten für die Wellen weiter zu vermindern.

4. Faseroptisches Interferometer nach Anspruch 3, dadurch gekennzeichnet, daß der Modulator (13) derart angeordnet ist, daß er Licht von der Lichtquelle (10) empfängt.

5. Faseroptisches Interferometer nach einem der Ansprüche 1 bis 4, dadurch gekennzeichnet, daß das faseroptische Material für die Vielzahl der Frequenzen der Lichtquelle (10) im Einzelmodus arbeitet.

6. Faseroptisches Interferometer nach einem der Ansprüche 1 bis 5, dadurch gekennzeichnet, daß die Lichtquelle im wesentlichen polarisiertes thermisches Licht emittiert, dessen Intensität ein stochastischer, stationärer und ergodischer Prozess ist.

7. Faseroptisches Interferometer nach einem der Ansprüche 1 bis 6, dadurch gekennzeichnet, daß die Lichtquelle (10) eine superlumineszierende Diode ist.

8. Faseroptisches Interferometer nach einem der Ansprüche 1 bis 7, dadurch gekennzeichnet, daß die Lichtquelle (10) eine Multimodus-Quelle ist, die eine deterministische Phasenbeziehung zwischen den Moden besitzt.

9. Faseroptisches Interferometer nach einem der Ansprüche 1 bis 7, dadurch gekennzeichnet, daß die Lichtquelle (10) eine Multimodus-Lichtquelle ist, welche eine zufällige Phasenbeziehung zwischen den Moden besitzt.

10. Faseroptisches Interferometer nach einem der Ansprüche 1 bis 9, dadurch gekennzeichnet, daß die Lichtquelle (10) wenigstens fünfzig axiale Moden besitzt.

11. Verfahren zur Verminderung des durch Kerr-Effekt induzierten Fehlers in einem faseroptischen Ringinterferometer, gekennzeichnet durch die folgenden Verfahrensschritte:

Auswählen einer Lichtquelle (10) mit einer Vielzahl von Frequenzen zur Erzeugung von intensitätsmoduliertem Licht, in welchem der Mittelwert des Quadrats der Intensität im wesentlichen gleich dem zweifachen des Mittelwerts des Quadrats der Intensität ist, so daß der auf dem Kerr-Effekt beruhende Rotationsratenfehler wesentlich auf einen Wert von weniger oder gleich 0,1 Grad pro Stunde vermindert wird;

Einkoppeln von Licht in das Interferometer, so daß erste und zweite gegenläufige Wellen durch es hindurchwandern;

Kombinieren der gegenläufigen Wellen zur Erzeugung eines Interferenzmusters; und

Detektieren von Intensitätsvariationen in dem Interferenzmuster.

**Revendications**

1. Interféromètre à fibre optique à erreur réduite du taux de rotation induite par l'effet Kerr, comprenant:

une source de lumière multimode (10) émettant un signal de lumière total, ledit signal de lumière total étant la somme des signaux pour chaque mode et ayant une multiplicité de fréquences;

une boucle (14) faite d'un matériau de fibre optique; et

un coupleur (34) pour coupler la lumière de la source vers la boucle (14) afin de produire une première et une seconde ondes de lumière dans ladite boucle se propageant dans des directions opposées dans ladite boucle, caractérisé en ce que l'amplitude de champ du signal total de la lumière émise par ladite source d lumière multimode est telle que la différence entre la valeur moyenne du carré de l'intensité dudit signal total et deux foix le carré de la valeur moyenne de l'intensité dudit signal total est suffisamment faible pour sensiblement diminuer l'erreur du taux de rotation due à l'effet Kerr jusqu'à une valeur inférieure ou égale à 0.1 degré par heure, ce qui résulte en une réduction des différences dans les constantes de propagation moyennes pour lesdites ondes.

2. Interféromètre à fibre optique tel qu'il est défini dans la revendication 1, caractérisé en ce que ladite source de lumière multimode a un nombre discret de modes et un cycle opératoire pratiquement égal à 50%, ledit cycle opératoire étant obtenu par le choix d'un nombre de modes suffisamment élevé pour décroître ladite erreur du taux de rotation induite par l'effet Kerr pour une intensité moyenne donnée dudit signal de lumière total.

3. Inteféromètre à fibre optique tel qu'il est défini dans la revendication 1 ou 2, caractérisé en outre par un modulateur (13) pour moduler l'intensité de la lumière de ladite source de lumière, ledit modulateur coopérant avec les variations dans le signal de lumière émis par ladite source de lumière de façon à réduire davantage les différences dans les constantes de propagation moyennes pour les ondes de lumière.

4. Interféromètre à fibre optique tel qu'il est défini dans la revendication 3, caractérisé en ce que le modulateur (13) est disposé de façon à recevoir la lumière de la source de lumière (10).

5. Interféromètre à fibre optique tel qu'il est défini dans l'une quelconque des revendications 1 à 4, caractérisé en ce que le matériau de fibre optique est monomode pour ladite multiplicité de fréquences de ladite source de lumière (10).

6. Interféromètre à fibre optique tel qu'il est défini dans l'une quelconque des revendications 1 à 5, caractérisé en ce que ladite source de lumière émet de la lumière thermale sensiblement polarisée dont l'intensité est un procédé stochastique, stationnaire et ergodique.

7. Interféromètre à fibre optique tel qu'il est défini dans l'une quelconque des revendications 1 à 6, caractérisé en ce que ladite source de lumière (10) est une diode superluminescente.

8. Interféromètre à fibre optique tel qu'il est défini dans l'une quelconque des revendications 1 à 7, caractérisé en ce que ladite source de lumière (10) comprend une source multimode ayant une relation de phase déterministe entre lesdits modes.

9. Interféromètre à fibre optique tel qu'il est défini dans l'une quelconque des revendications 1 à 7, caractérisé en ce que ladite source de lumière (10) comprend une source de lumière multimode ayant une relation de phase aléatoire entre lesdits modes.

10. Interféromètre à fibre optique tel qu'il est défini dans l'une quelconque des revendications 1 à 9, caractérisé en ce que ladite source de lumière (10) a au moins 50 modes axiaux.

11. Méthode de réduction de l'erreur induite par l'effet Kerr dans un interféromètre à anneau à fibre optique, caractérisée par les étapes suivantes:

sélectionner une source de lumière (10) ayant une multiplicité de fréquences afin de produire de la lumière à intensité modulée dans laquelle la valeur moyenne du carré de l'intensité est sensiblement égale à deux fois la valeur moyenne de l'intensité au carré de façon à réduire de manière sensible l'erreur de taux de rotation due à l'effet Kerr à une valeur inférieure ou égale à 0.1 degré par heure;

coupler la lumière dans l'interféromètre de telle sorte que les première et seconde ondes se propageant dans des directions opposées passent par ledit interféromètre;

combiner les ondes se propageant dans des directions opposées de façon à produire une frange d'interférence; et

détecter les variations d'intensité dans la frange d'interférence.

Fig. 1

DISPLAY

LOCK-IN AMPLIFIER

AC GENERATOR

EP 0 124 524 B1

*Fig. 2*

*Fig. 3*

*Fig. 4*

2

*Fig. 5*

*Fig. 6*

Fig. 7

Fig. 8

Fig. 9

Fig. 10

5

Fig. 11

Fig. 12